# EUROPEAN PATENT SPECIFICATION

(11) **EP 2 881 911 B1**
(45) Date of publication and mention of the grant of the patent: **13.03.2019**
(21) Application number: 13827291.9
(22) Date of filing: 05.08.2013
(51) Int. Cl.: G06Q 50/06, H02J 13/00, H02J 3/38, G06Q 30/02, G05B 15/02, H02J 3/14, H02J 3/00

(54) **ENERGY MANAGEMENT DEVICE AND ENERGY MANAGEMENT METHOD**
ENERGIEVERWALTUNGSVORRICHTUNG UND ENERGIEVERWALTUNGSVERFAHREN
DISPOSITIF DE GESTION D'ÉNERGIE ET PROCÉDÉ DE GESTION D'ÉNERGIE

(30) Priority: 06.08.2012 JP 2012174420
(43) Date of publication of application: 10.06.2015
(73) Proprietor: Kyocera Corporation, Kyoto-shi, Kyoto 612-8501 (JP)
(72) Inventor: SHIGA, Akihiro, Kyoto-shi Kyoto 612-8501 (JP)
(74) Representative: SSM Sandmair
(86) International application number: PCT/JP2013/004725
(87) International publication number: WO 2014/024463

(56) References cited:
- JP-A- 2003 006 291
- JP-A- 2008 158 701
- JP-A- 2011 122 908
- JP-A- 2011 180 807
- US-A1- 2008 228 518
- US-A1- 2009 063 367
- US-A1- 2012 109 705

## Description

### TECHNICAL FIELD

The present invention relates to an energy management apparatus, and an energy management method.

### BACKGROUND ART

In recent years, as an example of an energy management apparatus provided to each consumer of electric power, technique has been known such as a power management apparatus (e.g. home energy management system (HEMS)) to control load equipment, a dispersed power source, and the like in the power consumer's site or facility (see Patent Literature 1). The power management apparatus may acquire and store temporal changes of various types of power amounts, such as the amount of power consumed by load equipment, the amount of power generated by a dispersed power source, and the amount of power supplied from a commercial power source controlled or monitored by the power management apparatus.

### CITATION LIST

Patent Literature 1: Japanese Unexamined Patent Application Publication No. 2003-309928

Moreover document US 2012/109705 A1 published the 3rd of May 2012, is identified and discloses, in the wording of the claims:
An energy management apparatus comprising:an acquisition unit configured to acquire power information of at least one of power consumed by load equipment, power generated by a dispersed power source, power purchased from a commercial power source and power sold to the commercial power source;a communication unit configured to communicate with a communication terminal, wherein the communication unit is configured to receive a request signal from the communication terminal, and transmit information to the communication terminal; and a controller configured to calculate price information based on the acquired power information and, in response to a request from the communication terminal, transmit the price information to the communication terminal via the communication unit.

However document US 2012/109705 A1 does not disclose solutions so that the communication of a user request is using dedicated codes.

More particularly document US 2012/109705 A1 does not disclose that the request signal has a format with a code indicating a request signal for price information or a format with a code indicating a request signal for power information.

### SUMMARY OF INVENTION

### (Technical Problem)

Further detailed study is needed to more efficiently use information of various types of power amounts acquired by the energy management apparatus.

In view of such circumstances, the present invention has an object of providing an energy management apparatus, and an energy management method that enable more efficient use of information acquired in a system for controlling and managing energy supply-demand states.

### (Solution to Problem)

To achieve the matter stated above, an energy management apparatus according to the present invention includes: an acquisition unit configured to acquire power information of at least one of power consumed by load equipment, power generated by a dispersed power source, power purchased from a commercial power source and power sold to the commercial power source;a communication unit configured to communicate with a communication terminal, wherein the communication unit is configured to receive a request signal from the communication terminal, and transmit information to the communication terminal; and a controller configured to calculate price information based on the acquired power information and, in response to a request from the communication terminal, transmit the price information to the communication terminal via the communication unit, wherein the controller is further configured to determine whether the request signal has a format with a code indicating a request signal for price information or a format with a code indicating a request signal for power information,acquire price information and transmit the acquired price information to the communication terminal in response to a request signal having a format with a code indicating a request signal for price information, and acquire power information and transmit the acquired power information to the communication terminal in response to a request signal having a format with a code indicating a request signal for power information.

In the energy management apparatus according to the present invention, the request from the communication terminal includes information related to a predetermined period, and the controller transmits the price information corresponding to the predetermined period, via the communication unit.

The energy management apparatus according to the present invention has price rate information, and the controller calculates the price information based on the price rate information.

In the energy management apparatus according to the present invention, the communication unit acquires the price rate information via a network.

In the energy management apparatus according to the present invention, the controller determines the price rate information.

An energy management method according to the present invention is an energy management method in an energy management system including: an energy management apparatus to be provided in a consumer's facility and manages power of load equipment in the consumer's facility; and a communication terminal, and includes steps of: the energy management apparatus and the communication terminal communicating with each other according to a predetermined protocol; the communication terminal requesting information from the energy management apparatus, using a code specified in the predetermined protocol; and the energy management apparatus transmitting any of power information of the load equipment and price information calculated based on the power information to the communication terminal, according to a type of the code in the request.

### (Advantageous Effect of Invention)

The energy management apparatus, the energy management system, and the energy management method according to the present invention as described above enable more efficient use of information acquired in a system for controlling and managing energy supply-demand states.

### BRIEF DESCRIPTION OF DRAWINGS

The present invention will be further described below with reference to the accompanying drawings, wherein:
FIG. 1 is a functional block diagram schematically illustrating the configuration of an energy management system according to an embodiment of the present invention;
FIG. 2 is a functional block diagram schematically illustrating the configuration of an energy management apparatus in FIG. 1; and
FIG. 3 is a flowchart illustrating the operation of the energy management system according to the embodiment of the present invention.

### DESCRIPTION OF EMBODIMENTS

The following describes an embodiment of the present invention.

### (Embodiment)

An energy management system according to Embodiment 1 is described. The energy management system according to this embodiment may include a system for supplying power by solar power generation or the like as a dispersed power source and a storage battery system capable of charge and discharge, in addition to power supplied from an electric power grid (commercial power source).

The system for supplying power is not limited to a system for supplying power by solar power generation, and may be any of various power generation systems including a fuel cell system having fuel cells such as solid oxide fuel cells (SOFCs). The embodiment described below uses an example where a solar power generation system is included as a power generation system and a power storage is included as a storage battery system.

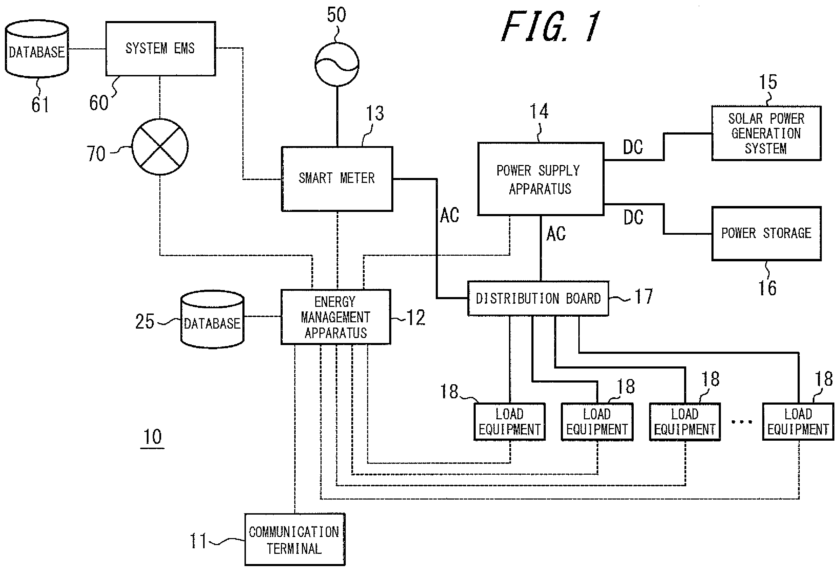

FIG. 1 is a functional block diagram schematically illustrating the configuration of the energy management system according to this embodiment. As illustrated in FIG. 1, an energy management system 10 according to this embodiment includes a communication terminal 11, an energy management apparatus 12, a smart meter 13, a power supply apparatus 14, a solar power generation system 15, and a power storage 16.

In FIG. 1, the solid lines between the functional blocks represent the flow of power, and the dashed lines between the functional blocks represent the flow of control signals or information communicated. The communication represented by the dashed lines may be wired communication or wireless communication.

Various schemes are available for communication of information and control signals, including the physical and logical layers. For example, the communication between the energy management apparatus 12 and each of the communication terminal 11, the smart meter 13, and the power supply apparatus 14 may be performed by a short-range communication scheme such as ZigBee®. The communication between the energy management apparatus 12 and load equipment 18 may be performed using various transmission media such as infrared communication and power line communication (PLC). Moreover, any of various communication protocols defining the logical layer, such as ZigBee SEP 2.0 (Smart Energy Profile 2.0) and ECHONET Lite®, may be operated on the physical layer suitable for each communication. The following describes an example where ECHONET Lite® is used when the energy management apparatus 12 communicates with the communication terminal 11, the smart meter 13, the power supply apparatus 14, and the load equipment 18.

The energy management system 10 may supply not only power supplied from a commercial power source 50 but also power generated by the solar power generation system 15 and power obtained by discharging the charged power storage 16, to the load equipment 18.

The communication terminal 11 may display information and energy management states acquired from the energy management apparatus 12. The configuration of the communication terminal 11 will be described in detail later.

The energy management apparatus 12 controls and manages the power of components in the energy management system 10 illustrated in FIG. 1. The configuration of the energy management apparatus 12 will be described in detail later.

The smart meter 13 is connected to the commercial power source 50, and measures purchased power supplied from the commercial power source 50. The smart meter 13 is also connected to a distribution board 17, and measures power generated by the solar power generation system 15 and sold to an electric power company from the power supply apparatus 14 via the distribution board 17. The smart meter 13 may transmit the power measurement to the energy management apparatus 12.

The smart meter 13 may also receive information such as power-related predictions from a system energy management system (EMS) 60. The grid EMS 60 is a facility for performing various power-related predictions, control, etc., and is typically installed in the electric power company or the like. For example, the grid EMS 60 may include a meter data management system (MDMS). The grid EMS 60 has a database 61 for storing various types of power-related information, and may collect and store information of measurement results by the smart meter 13. The grid EMS 60 is connectable to a network 70.

The power supply apparatus 14 converts DC power supplied from the solar power generation system 15 and the power storage 16 into AC power. The power supply apparatus 14 supplies the converted AC power to the load equipment 18 via the distribution board 17. In the case where there is a surplus of power generated by the solar power generation system 15, the power supply apparatus 14 may sell the converted AC power to the electric power company via the distribution board 17. The power supply apparatus 14 may also convert AC power supplied from the commercial power source 50 into DC power for charging the power storage 16.

The solar power generation system 15 generates power using sunlight. The solar power generation system 15 includes solar cells, and converts energy from sunlight into DC power. It is assumed in this embodiment that the solar power generation system 15 has a configuration in which a solar panel is mounted on, for example, the roof of a house to generate power using sunlight. The solar power generation system 15 in the present invention, however, may have any configuration capable of converting energy from sunlight into power.

The power generated by the solar power generation system 15, having been converted into AC power by the power supply apparatus 14, may be supplied to the load equipment 18 and/or sold to the electric power company, as mentioned above. The power generated by the solar power generation system 15 may also be used to charge the power storage 16. The DC power generated by the solar power generation system 15 may be supplied to the load equipment 18 without being converted into AC power.

The power storage 16 includes a storage battery, and may supply power by discharging the charged storage battery. The power storage 16 may also be charged with power supplied from the commercial power source 50, the solar power generation system 15, etc. The power from the power storage 16 may also be supplied to the load equipment 18, as illustrated in FIG. 1.

The distribution board 17 distributes supplied power to the load equipment 18.

In FIG. 1, any number of apparatuses each as load equipment 18 may be connected to the energy management system 10. These load equipment 18 are, for example, various electrical appliances such as a television, an air conditioner, and a refrigerator. These load equipment 18 are connected to the power supply apparatus 14 via the distribution board 17, and supplied with power.

The communication terminal 11 according to this embodiment is described in more detail below.

The communication terminal 11 may be any type of terminal such as a mobile terminal, a personal computer (PC), a notebook computer, or a tablet terminal in which application software is installed.

The communication terminal 11 may include, for example, a liquid crystal display (LCD) or an organic EL display, and display information acquired from the energy management apparatus 12 as numerical values or graph images.

The communication terminal 11 may include, for example, a touch panel, and detect the user's operation of directly touching with his or her finger and the like. The communication terminal 11 may include operation means having physical keys. The control of the communication terminal 11 of this embodiment will be described later.

The communication terminal 11 performs, for example, wireless communication with the energy management apparatus 12. In detail, the communication terminal 11 transmits control signals and/or information to the energy management apparatus 12, and receives control signals and/or information from the energy management apparatus 12.

The energy management apparatus 12 according to this embodiment is described in more detail below.

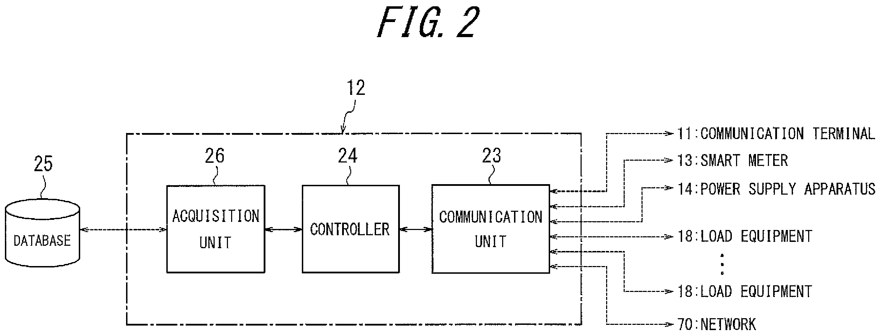

FIG. 2 is a functional block diagram schematically illustrating the configuration of the energy management apparatus 12 according to this embodiment. The energy management apparatus 12 is a HEMS as an example, and includes a communication unit 23, a controller 24, and an acquisition unit 26.

The communication unit 23 is an interface as an example, and transmits and receives various information and control signals between the controller 24 and each of the communication terminal 11, the smart meter 13, the power supply apparatus 14, and the load equipment 18.

For example, the communication unit 23 may receive from the smart meter 13 power information of power purchased from and/or sold to the commercial power source 50. The communication unit 23 may also receive information of demand response (DR), etc. including price rate information, from the electric power company or the like via the smart meter 13. The communication unit 23 may also acquire power information of power supplied from the solar power generation system 15, the power storage 16, and the commercial power source 50 to the load equipment 18 via a plurality of branches separated at the distribution board 17, from the power supply apparatus 14 via sensors provided in the respective branches. The communication unit 23 may also receive generated power information of power generated by the solar power generation system 15, from the power supply apparatus 14. The communication unit 23 may also directly receive power information (i.e. charging power information) of power with which the power storage 16 is charged, from the power supply apparatus 14. The communication unit 23 may also directly receive consumed power information from the load equipment 18. The communication unit 23 may also acquire various information from the network 70. The communication unit 23 may also communicate with the communication terminal 11 as described later. These communications conform to corresponding protocols.

Here, "price rate information" is information that provides variations in price, and includes, for example, information about the unit price of power purchased from the commercial power source 50, the unit price of power sold to the commercial power source 50, and the like. For instance, the unit price of purchased power may vary depending on the amount of purchased power or the time, as in time of use pricing (TOU), critical peak pricing (CPP), real-time pricing (RTP), etc. The unit price of purchased power or sold power may be fixed regardless of the amount of power or the time.

Moreover, the communication unit 23 may acquire a price information request signal from the communication terminal 11, and transmit price information in the energy management system 10 to the communication terminal 11. The communication unit 23 may also acquire a control signal from the communication terminal 11, and transmit information indicating the power control and management state in the energy management system 10 to the communication terminal 11. The energy management apparatus 12 and the communication terminal 11 preferably communicate with each other according to ECHONET Lite®. In this case, the price information request signal has a configuration conforming to the frame format of ECHONET Lite®. In detail, using a user defined area as the price information request signal, for example, a command (EPC) is set to "0xF4" and a property value (EDT) is set to information related to a predetermined period. The predetermined period is a period selected by the user, for example, one year, one month, one week, or one day. Such a request signal for price information is different in command from a request signal for power information, and these signals use different codes. In the case where the energy management apparatus 12 transmits the price information to the communication terminal 11, the property value is set to the price information corresponding to the predetermined period. With regard to a request signal for power information, information related to a predetermined period may be set as a property value (EDT) as in the case of requesting price information so that the power information corresponding to the predetermined period is transmitted from the energy management apparatus 12 to the communication terminal 11.

The controller 24 generates control signals for controlling the power of equipment in the energy management system 10 and/or information to be transmitted to the communication terminal 11, based on various information received by the communication unit 23.

The controller 24 has a database 25 for storing various collected information. The database 25 may be configured by using any memory device, etc., and may be externally connected to the energy management apparatus 12 or included in the energy management apparatus 12. The acquisition unit 26 reads information from and writes information to the database 25 under control of the controller 24.

The controller 24 may store, in the database 25, information acquired by the communication unit 23 such as power information of power purchased from the commercial power source 50, power sold to the commercial power source 50, power generated by the solar power generation system 15, power consumed by the load equipment 18, etc. as mentioned above. The controller 24 may also calculate price information based on each of the above-mentioned types of power information received by the communication unit 23. The controller 24 may store the calculated price information in the database 25, separately from each of the above-mentioned types of power information. The controller 24 may accumulate, for example, 10 years of each of the above-mentioned types of power information and the corresponding price information.

The following describes an example of the method of calculating each type of price information by the energy management apparatus 12. The price information of the power purchased from the commercial power source 50 is, for example, calculated based on the unit price of purchased power set by the electric power company and the power information of the power purchased from the commercial power source 50, the power information having been received by the communication unit 23 from the smart meter 13. The price information of the sold power is, for example, calculated based on the unit price of sold power set by the electric power company and the power information of the power sold to the commercial power source 50. The price information of the consumed power is calculated based on the consumed power information of the load equipment 18 received by the communication unit 23 and the unit price of purchased power. The price information of the generated power is calculated based on the generated power information received by the communication unit 23 and the unit price of sold power.

In the case where the unit price of purchased power and/or the unit price of sold power is fixed, the energy management apparatus 12 may acquire the unit price via the smart meter 13 beforehand. In the case where the unit price of purchased power and the unit price of sold power are not fixed, the energy management apparatus 12 may receive price rate information via the smart meter 13 on a regular or irregular basis and update each unit price.

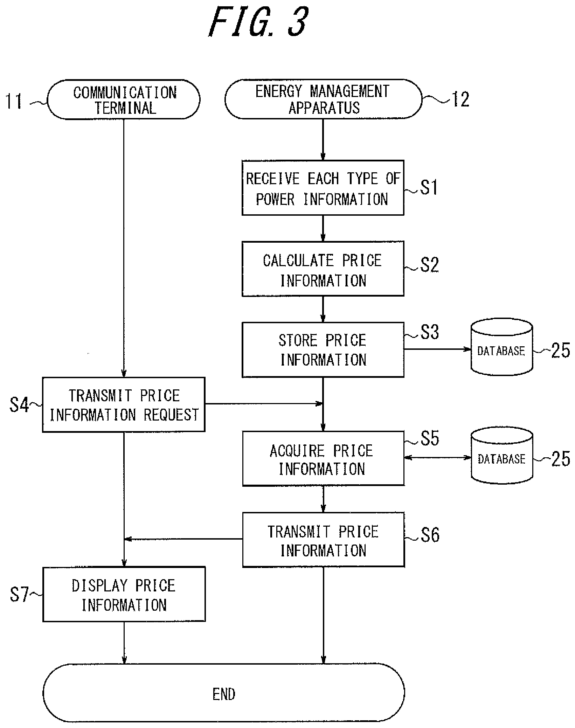

The following describes the operation of the energy management system 10 according to the embodiment of the present invention in the case where the communication terminal 11 acquires price information of each type of power from the energy management apparatus 12, with reference to a flowchart illustrated in FIG. 3.

The energy management apparatus 12 acquires, as price rate information, information of price per unit power via the smart meter 13 or the network 70 beforehand.

First, the communication unit 23 in the energy management apparatus 12 receives information of each type of power (at least one out of the following four elements: power consumed by the load equipment 18; power generated by the dispersed power source; power purchased from the commercial power source 50; and power sold to the commercial power source 50) (step S1).

Following this, the controller 24 in the energy management apparatus 12 calculates price information of each type of power, based on the received power information and price rate information (step S2).

The controller 24 then stores the calculated price information in the database 25 (step S3). For example, the energy management apparatus 12 may accumulate 10 years of price information in the database 25.

Next, the communication terminal 11 transmits, according to the user's operation, a price information request signal for a predetermined period (in hours, days, months, or years) designated by the user as the period of information the user wants to access, to the energy management apparatus 12 (step S4). The communication terminal 11 preferably communicates with the energy management apparatus 12 according to ECHONET Lite®. In this case, the price information request signal has a configuration conforming to the frame format of ECHONET Lite®.

The controller 24 in the energy management apparatus 12 requests price information from the database 25 according to the request from the communication terminal 11, and acquires price information or power information from the database 25 (step S5). In detail, the controller 24 checks the type of the request signal from the communication terminal 11, to determine whether the request signal has a format with a code indicating a request signal for price information or a format with a code indicating a request signal for power information. In the case of determining that the request signal is a request for price information, the controller 24 requests price information from the database 25, and acquires the price information from the database 25. In the case of determining that the request signal is a request for power information, the controller 24 acquires power information from the database 25.

The controller 24 then transmits the price information (power information) to the communication terminal 11 via the communication unit 23 (step S6). Here, the controller 24 transmits the price information or the power information to the communication terminal 11, in conformance with the frame formats, as specified in ECHONET Lite®, having different commands between price information and power information. The communication terminal 11 displays the price information or the power information as numerical values or graph information corresponding to the acquired information, on the liquid crystal display or the like (step S7).

Thus, according to the present invention, the energy management apparatus 12 calculates the price information based on the acquired information of each type of power, so that the communication terminal 11 may display the price information with no need to calculate the price information. This reduces the processing load on the communication terminal 11. Moreover, the communication terminal 11 does not need to acquire the information of the unit price of purchased electricity and the unit price of sold electricity, which reduces the communication load on the communication terminal 11. Further, in the case where the price information is accessed from a plurality of communication terminals 11, the same value calculated in the energy management apparatus 12 beforehand is transmitted to each communication terminal 11, thus preventing the situation where the displayed price differs between the communication terminals 11.

Although the foregoing embodiment describes the case where the communication unit 23 acquires the price rate information via the smart meter 13 or the network 70, the price rate information may be determined in the energy management apparatus 12, that is, the controller 24 in the energy management apparatus 12 may determine the price rate information. There is an instance where the unit price of sold electricity is set depending on the type of dispersed power source provided to the consumer. In such a case, the energy management apparatus 12 may determine the unit price of electricity, without using the network 70. Likewise, there is an instance where the unit price of sold electricity is set depending on the time of day and/or the time of year. In such a case, too, the energy management apparatus 12 may determine the price rate information.

Although the present invention has been described by way of the drawings and embodiments, various changes and modifications may be easily made by those of ordinary skill in the art based on the present disclosure. Such various changes and modifications are therefore included in the scope of the present invention. For example, the functions included in the means, steps, etc. may be rearranged without logical inconsistency, and a plurality of means, steps, etc. may be combined into one means, step, etc. and a means, step, etc. may be divided into a plurality of means, steps, etc.

### REFERENCE SIGNS LIST

- 10: energy management system
- 11: communication terminal
- 12: energy management apparatus
- 13: smart meter
- 14: power supply apparatus
- 15: solar power generation system
- 16: power storage
- 17: distribution board
- 18: load equipment
- 19: display
- 20: input detection unit
- 21: controller
- 22: interface
- 23: communication unit
- 24: controller
- 25: database
- 26: acquisition unit
- 50: commercial power source
- 60: grid EMS
- 61: database
- 70: network

## Claims

1. An energy management apparatus (12) comprising:
an acquisition unit (26) configured to acquire power information of at least one of power consumed by load equipment (18), power generated by a dispersed power source, power purchased from a commercial power source (50) and power sold to the commercial power source (50);
a communication unit (23) configured to communicate with a communication terminal (11), wherein the communication unit (23) is configured to receive a request signal from the communication terminal (11), and transmit information to the communication terminal (11); and
a controller (24) configured to calculate price information based on the acquired power information and, in response to a request from the communication terminal (11), transmit the price information to the communication terminal (11) via the communication unit (23),
**characterized in that**:
the controller (24) is further configured to
determine whether the request signal has a format with a code indicating a request signal for price information or a format with a code indicating a request signal for power information,
acquire price information and transmit the acquired price information to the communication terminal (11) in response to a request signal having a format with a code indicating a request signal for price information, and
acquire power information and transmit the acquired power information to the communication terminal (11) in response to a request signal having a format with a code indicating a request signal for power information.

2. The energy management apparatus (12) according to claim 1,
wherein the request from the communication terminal (11) includes information related to a predetermined period, and
the controller (24) transmits the price information corresponding to the predetermined period, via the communication unit (11).

3. The energy management apparatus (12) according to claim 1,
wherein the energy management apparatus (12) has price rate information, and
the controller (24) calculates the price information based on the price rate information.

4. The energy management apparatus (12) according to claim 3,
wherein the communication unit (23) acquires the price rate information via a network (70).

5. The energy management apparatus (12) according to claim 3,
wherein the controller (24) determines the price rate information.

6. An energy management method in an energy management system (10) including: an energy management apparatus (12) to be provided to a consumer's facility and manages power of load equipment in the consumer's facility; and a communication terminal (11), the energy management method including steps of:
the energy management apparatus (12) and the communication terminal (11) communicating with each other according to a predetermined protocol;
the communication terminal (11) requesting information from the energy management apparatus (12), using a code specified in the predetermined protocol; and
the energy management apparatus (12) transmitting any of power information of the load equipment and price information calculated based on the power information to the communication terminal (11), according to a type of the code in the request.

## Patentansprüche

1. Energiemanagementvorrichtung (12), umfassend:
eine Erfassungseinheit (26), die konfiguriert ist, Leistungsinformationen von mindestens einem aus Leistung, die von Belastungsgeräten (18) verbraucht wird, Leistung, die von einer dispergierten Leistungsquelle erzeugt wird, Leistung, die von einer handelsüblichen Leistungsquelle (50) erworben wird, und Leistung, die der handelsüblichen Leistungsquelle (50) verkauft wird, zu erfassen;
eine Kommunikationseinheit (23), die konfiguriert ist, mit einem Kommunikationsendgerät (11) zu kommunizieren, wobei die Kommunikationseinheit (23) konfiguriert ist, ein Anforderungssignal vom Kommunikationsendgerät (11) zu empfangen und dem Kommunikationsendgerät (11) Informationen zu übertragen; und
eine Steuerung (24), die konfiguriert ist, Preisinformationen basierend auf den erfassten Leistungsinformationen zu berechnen und, als Reaktion auf eine Anforderung vom Kommunikationsendgerät (11), die Preisinformationen dem Kommunikationsendgerät (11) über die Kommunikationseinheit (23) zu übertragen,
**dadurch gekennzeichnet, dass**:
die Steuerung (24) ferner konfiguriert ist,
zu bestimmen, ob das Anforderungssignal ein Format mit einem Code, der ein Anforderungssignal für Preisinformationen angibt, oder ein Format mit einem Code, der ein Anforderungssignal für Leistungsinformationen angibt, hat,
Preisinformationen zu erfassen und die erfassten Preisinformationen dem Kommunikationsendgerät (11) als Reaktion auf ein Anforderungssignal zu übertragen, das ein Format mit einem Code hat, der ein Anforderungssignal für Preisinformationen angibt, und
Leistungsinformationen zu erfassen und die erfassten Leistungsinformationen dem Kommunikationsendgerät (11) zu übertragen als Reaktion auf ein Anforderungssignal, das ein Format mit einem Code hat, der ein Anforderungssignal für Leistungsinformationen angibt.

2. Energiemanagementvorrichtung (12) nach Anspruch 1,
wobei die Anforderung vom Kommunikationsendgerät (11) Informationen zu einem vorbestimmten Zeitraum umfasst und
die Steuerung (24) die Preisinformationen entsprechend dem vorbestimmten Zeitraum über die Kommunikationseinheit (11) überträgt.

3. Energiemanagementvorrichtung (12) nach Anspruch 1,
wobei die Energiemanagementvorrichtung (12) Preisrateninformationen hat und
die Steuerung (24) die Preisinformationen basierend auf den Preisrateninformationen berechnet.

4. Energiemanagementvorrichtung (12) nach Anspruch 3,
wobei die Kommunikationseinheit (23) die Preisrateninformationen über ein Netzwerk (70) erfasst.

5. Energiemanagementvorrichtung (12) nach Anspruch 3,
wobei die Steuerung (24) die Preisrateninformationen bestimmt.

6. Energiemanagementverfahren in einem Energiemanagementsystem (10), umfassend: eine Energiemanagementvorrichtung (12), die einer Anlage eines Verbrauchers bereitgestellt werden soll und die Leistung von Belastungsgeräten in der Anlage des Verbrauchers verwaltet; und ein Kommunikationsendgerät (11), wobei das Energiemanagementverfahren folgende Schritte umfasst:
die Energiemanagementvorrichtung (12) und das Kommunikationsendgerät (11) kommunizieren miteinander gemäß einem vorbestimmten Protokoll;
das Kommunikationsendgerät (11) fordert Informationen von der Energiemanagementvorrichtung (12) an unter Verwendung eines im vorbestimmten Protokoll festgelegten Codes; und
die Energiemanagementvorrichtung (12) überträgt beliebige aus Leistungsinformationen der Belastungsgeräte und Preisinformationen, die basierend auf den Leistungsinformationen des Kommunikationsendgeräts (11) berechnet werden, gemäß einem Typ des Codes in der Anforderung.

## Revendications

1. Appareil de gestion d'énergie (12), comprenant :
une unité d'acquisition (26) configurée pour acquérir des informations de puissance d'au moins une de: puissance consommée par un équipement de charge (18), puissance générée par une source de puissance dispersée, puissance achetée auprès d'une source de puissance commerciale (50) et puissance vendue à la source de puissance commerciale (50) ;
une unité de communication (23) configurée pour communiquer avec un terminal de communication (11), dans lequel l'unité de communication (23) est configurée pour recevoir un signal de demande provenant du terminal de communication (11), et transmettre des informations au terminal de communication (11) ; et
un dispositif de commande (24) configuré pour calculer des informations de prix sur la base des informations de puissance acquises et, en réponse à une demande provenant du terminal de communication (11), transmettre les informations de prix au terminal de communication (11) par l'intermédiaire de l'unité de communication (23), **caractérisé en ce que** :
le dispositif de commande (24) est en outre configuré pour déterminer si le signal de demande a un format avec un code indiquant un signal de demande d'informations de prix ou un format avec un code indiquant un signal de demande d'informations de puissance,
acquérir des informations de prix et transmettre les informations de prix acquises au terminal de communication (11) en réponse à un signal de demande ayant un format avec un code indiquant un signal de demande d'informations de prix, et acquérir des informations de puissance et transmettre les informations de puissance acquises au terminal de communication (11) en réponse à un signal de demande ayant un format avec un code indiquant un signal de demande d'informations de puissance.

2. Appareil de gestion d'énergie (12) selon la revendication 1,
dans lequel la demande provenant du terminal de communication (11) inclut des informations connexes à une période prédéterminée, et
le dispositif de commande (24) transmet les informations de prix correspondant à la période prédéterminée, par l'intermédiaire de l'unité de communication (11).

3. Appareil de gestion d'énergie (12) selon la revendication 1,
dans lequel l'appareil de gestion d'énergie (12) a des informations de tarif de prix, et
le dispositif de commande (24) calcule les informations de prix sur la base des informations de tarif de prix.

4. Appareil de gestion d'énergie (12) selon la revendication 3,
dans lequel l'unité de communication (23) acquiert les informations de tarif de prix par l'intermédiaire d'un réseau (70).

5. Appareil de gestion d'énergie (12) selon la revendication 3,
dans lequel le dispositif de commande (24) détermine les informations de tarif de prix.

6. Procédé de gestion d'énergie dans un système de gestion d'énergie (10) incluant : un appareil de gestion d'énergie (12) destiné à être fourni à un établissement d'un client et gérer une puissance d'un équipement de charge dans l'établissement du client ; et un terminal de communication (11), le procédé de gestion d'énergie incluant les étapes de :
par l'appareil de gestion d'énergie (12) et le terminal de communication (11), la communication l'un avec l'autre selon un protocole prédéterminé ;
par le terminal de communication (11), la demande d'informations à l'appareil de gestion d'énergie (12), en utilisant un code spécifié dans le protocole prédéterminé ; et
par l'appareil de gestion d'énergie (12), la transmission de quelconques de : informations de puissance de l'équipement de charge et informations de prix calculées sur la base des informations de puissance, au terminal de communication (11), selon un type du code dans la demande.
